# EUROPEAN PATENT SPECIFICATION

(11) **EP 3 813 553 B1**
(45) Date of publication and mention of the grant of the patent: **10.06.2026**
(21) Application number: 19826663.7
(22) Date of filing: 28.06.2019
(51) Int. Cl.: A23L 5/42, A23G 3/34, A23L 5/40, A23G 1/54, A23G 3/54, A23G 4/20, A23G 4/02, A23L 5/43, A23L 5/47

(54) **TITANIUM FREE OPACIFYING COMPOSITIONS**
TITANFREIE TRÜBUNGSZUSAMMENSETZUNGEN
COMPOSITIONS OPACIFIANTES EXEMPTES DE TITANE

(30) Priority: 28.06.2018 US 201862691181 P
(43) Date of publication of application: 05.05.2021
(73) Proprietor: Wm. Wrigley Jr. Company, Chicago, IL 60642 (US)
(72) Inventor: MARTIN, Penny, Chicago, Illinois 60642 (US)
(74) Representative: Haseltine Lake Kempner LLP
(86) International application number: PCT/US2019/040005
(87) International publication number: WO 2020/006525

(56) References cited:
- CN-A- 105 142 418
- US-A- 4 750 938
- US-A1- 2003 026 878
- US-A1- 2005 006 041
- US-A1- 2007 048 407
- US-A1- 2007 048 407
- US-A1- 2007 098 859
- US-A1- 2016 029 657

## Description

### FIELD

The presently disclosed subject matter relates to compositions comprising a low-dye lake as an opacifying composition to provide desired opacity and enhance color or whiteness to confectioneries and foods, as well as edible coatings applied to food and confectionery products.

### BACKGROUND

The food industry maintains an interest in procuring ingredients that provide whiteness and opacity to food, confections, and chewing gum. Conventionally, white colorants, such as titanium dioxide, have been used as an opacifier and whitener to make a substrate such as a coating composition surrounding a candy center appear more opaque. Such conventional white colorants are often applied to foods, within or on the outer coating layers of hard or soft panned coatings, mixed with colors to produce pastel shades, adding directly into pet foods or foods to opacify the shade of a composition, or used as ink for marking the surface of a food product.

There is growing interest in using white colored coating compositions, and edible inks that do not contain titanium dioxide in food products. Various non-artificial white materials, including calcium carbonate (CaCO₃) and rice starch, have been considered for use as opacifying agents in hard or soft panned coatings and in edible inks, but these materials require usage rates that are impractical for certain applications, alter the taste, texture, or shelf life of a food product, or do not provide the same level of opacity as titanium dioxide. Additionally, when using titanium dioxide free white materials in edible colored coatings, such materials often do not exhibit the same true color as when those edible colored coatings are applied using titanium dioxide. CN 105142418 A discloses colored wax compositions comprising a multiplicity of colored wax particles that provide a speckled appearance when applied to the surface of a confectionery composition. US 4,750,938 B discloses an aqueous phosphate pigment dispersion usable for sugar or film coating tablets and the like. US 2007/098859 A1 discloses a method of coloring panned confectioneries with ink-jet printing. US 2007/048407 A1 discloses a decorated edible product comprising: a confectionery center, a non-chocolate edible surface, an edible color enhancement coating that is substantially gray colored disposed on at least a portion of the non-chocolate edible surface, and an edible image formed on at least a portion of the color enhancement coating.

Often, from a consumer standpoint, compositions containing titanium dioxide or those containing titanium dioxide- free whitening or opacifying options, such as rice starch, are mediocre. The presently disclosed subject matter addresses these and other needs as discussed in detail below.

### SUMMARY OF THE INVENTION

The present disclosure is defined in and by the appended claims. The present disclosure provides low-dye lake pigments for use as opacifying compositions. The opacifying compositions can be integrated into a variety of products, such as foods, pet foods, confectionery compositions, coatings or edible inks. The opacifying compositions include one or more low dye lake pigments and can be used in a soft or hard panned coating as is, or dispersed in a coating syrup such as a sugar or polyol syrup with the opacifying composition applied to at least one layer of the soft or hard panned coating. Alternatively, the opacifying compositions can be included in a sugar or polyol syrup and containing one or more low-dye lake pigments, which is then used in a soft or hard panned coating and applied to the outside coloring layers of the coating.

The present disclosure provides an opacifying composition for confectioneries and foods, including one or more low-dye FD&C lake pigments with the pure dye present in an amount from about 0.0001 wt. % about 5 wt. % based on the total weight of the opacifying composition, and 99.9999 wt.% to about 95 wt.% aluminum hydroxide, based on the total weight of the opacifying composition. In other aspects, the one or more low-dye FD&C lake pigments with the pure dye present in an amount of from about approximately 0.0001 wt. % to about 1 wt. % based on the total weight of the opacifying composition. The opacifying composition may include a liquid suspending medium such as for inks or coating applications., Alternatively, for applications such as pet foods, foods and confections, no aqueous suspending medium is required for the opacifying composition since the low dye lake could be used on its own, or as-is (i.e., dry powdered lake). In some cases a dry dispersing medium can be used including maltodextrin or aluminum hydroxide.

In certain aspects, the one or more low-dye FD&C lake pigments can include, FD&C Blue #1 Lake, FD&C Yellow 5 Lake, FD&C Green #3 Lake, FD&C Yellow #6 Lake, FD&C Red #40 Lake, FD&C Blue #2 Lake, or similar synthetic colorants such as carmoisine, amaranth and the like, or mixtures thereof.

In certain aspects the liquid suspending medium can be a syrup or a similar carrier. The syrup can include a sugar syrup, a sugar free syrup, glycerin or an ink solution (water or alcohol based).

In other aspects, the syrup solution contains a colorant, and the syrup is sugar syrup, selected from sucrose, glucose or dextrose, or the syrup is a sugar free syrup selected from maltitol, sorbitol, xylitol, isomalt and the like, alone or in any combination.

In certain aspects, the opacifying composition can further include one or more natural colorants such as annatto, turmeric, beta carotene, carmine, anthocyanins, spirulina, gardenia blue and the like.

The present disclosure further provides an opacifying composition, including a very low-dye FD&C Blue # 1 Lake pigment with a pure dye present in an amount of from about 0.0001 wt. % to about 5 wt. % and 99.9999 wt.% to about 95 wt.% aluminum hydrate based on the total weight of the opacifying composition; the opacifying composition may be applied with or without a liquid or dry suspending and dispersing medium.

In some aspects, the opacifying composition contains FD&C Blue 1 Lake from about 0.0001% wt. to 1% wt. by weight of the opacifying composition. In other aspects, the opacifying composition contains FD&C Yellow 5 Lake from about broad 0.0001% wt. to 2% wt. by weight of the opacifying composition.

In certain aspects, the liquid suspending medium can be a syrup solution, a sugar solution, a sugar-free polyol solution or an ink solution.

In certain aspects, the opacifying composition can further includes a natural colorant.

In certain aspects, the opacifying composition is used in a confectionery composition.

In certain aspects, the opacifying composition is used in pet foods.

In certain aspects, the opacifying composition is used in food products.

The present disclosure provides a confectionery product such as a chewing gum, chewy confection, chocolate, or hard candy wherein the confectionery product contains approximately 0.5 wt.% to about 5% wt.% opacifying composition by weight of the confectionery product. In another embodiments, the confectionery product contain 2 wt. % opacifying composition by weight of the confectionery product.

**In** certain aspects, the opacifying composition is used in an edible ink for marking foods products such as confections, chocolates, and chewing gum.

The present disclosure provides edible inks for marking food products wherein the edible ink contains 10 wt.% to about 40 wt.%, or from about 20 wt.% to about 50 wt.% opacifying composition by weight of the edible ink. **In** another aspect, the edible ink contains about 30 wt.% of the opacifying composition.

In certain aspects, the opacifying composition can be a pre-coating sugar syrup layer.

In certain aspects, the opacifying composition can be added to a confectionary layer as a powdered lake, admixed with a dry charge.

In certain aspects, the opacifying composition can be present in two or more of the sugar syrup layers.

In certain aspects, the one or more sugar syrup layers do not contain the one or more opacifying compositions.

The present disclosure further provides a soft or hard panned coating, including one or more sugar or sugar-free syrup layers, wherein at least one layer is an opacifying layer formed from an opacifying composition including one or more very low dye FD&C lake pigments with a pure dye content in an amount of from about 0.0001 wt.% to about 5.0 wt.%, and from about 99.9999 wt.% to about 95 wt.% aluminum hydrate, or with a pure dye content from about 0.0001 wt. % to about 1 wt. % and from about 99.9999 wt% to about 99 wt % aluminum hydrate, based on the total weight of the opacifying composition.

In certain aspects, the soft or hard panned coating or ink can further include a natural colorant.

In certain aspects, the syrup solution can contain another colorant, wherein the syrup solution is selected from sucrose, glucose or dextrose or sugar free polyol.

In certain aspects, the confectionery composition, soft or hard panned coating, and ink, does not contain titanium dioxide.

The present disclosure further provides a soft or hard panned confection, including an edible core coated with a soft or hard panned coating.

In certain aspects, the edible core can include an edible material selected from a non-artificial center, a confection, a chewing gum, a grain-based item, or a combination thereof.

In certain aspects, the edible core can include chocolate.

In certain aspects, the opacifying composition can be included in a coating composition wherein the coating layer containing the opacifying composition can be applied nearest to the edible core, to coating layers containing a colorant, or to an edible ink for marking the surface of a confectionery.

The present disclosure further provides a soft or hard panned coating, including two or more sugar syrup layers, wherein at least one layer is an opacifying layer formed from an opacifying composition comprising one or more low-dye FD&C Blue # 1 Lake pigments with a pure dye present in an amount of from about 0.0001 wt.% to about 5 wt.% and from about 99.9999 wt.% to about 95 wt.% aluminum hydrate based on the total weight of the opacifying composition; and wherein the edible soft or hard panned coating does not comprise titanium dioxide.

The present disclosure further provides a method of coating an edible core with a soft or hard panned coating, including the following steps: applying a first composition comprising the opacifying composition of claim 1 dispersed in a sugar syrup in an amount of from about lwt.% to about 30 wt.% based on the total weight of the first coating composition to provide at least one layer of the hard panned coating;
and applying a second coating composition including sugar syrup but not comprising one or more opacifying compositions to provide at least one additional layer of the soft or hard panned coating.

In certain aspects, the method can further include at least partially drying the layers after each of the steps.

In certain aspects, the first coating layer can be applied to a prepared surface of the edible core.

In another aspect, the edible core has an edible coating composition wherein the edible coating contains 1% of the opacifying composition in its dry, powdered form by weight of the edible coating composition.

In certain aspects, the second coating layer can further comprise a natural colorant.

In certain aspects, the first coating layer and the second coating layer do not comprise titanium dioxide.

In certain aspects the edible core is a chewing gum.

In certain aspects the coating comprises one or more polyols.

In certain aspects the low dye lake is added as is to a pet food or food product to provide opacity and whitening.

### DETAILED DESCRIPTION

As noted above, to date, there remains a need in the art for opacifying compositions that limit or do not contain titanium dioxide, and are able to be used in food products, confectionery products, inks, and coatings without comprising taste, texture, or shelf life, nor diminishing the level of opacity or visual aesthetics of a product.

The present disclosure provides an opacifying composition to a chewing gum or confectionery composition to enhance whiteness and opacity to confections, with or without colorants or additional opacifiers, such as calcium carbonate or titanium dioxide. The present disclosure also provides an opacifying composition to a layer of a soft or hard panned coating to mask the color of an edible core of a confection or chewing gum. Alternatively, the opacifying composition can be used along with other colorants in the coating layers of an edible coating to create a pastel shade to the coloring layers or an opaque outer layer. The present disclosure provides such opacifying compositions with a very low amount of dye to provide a desired whiteness and opacity, and to provide a precoat to enhance edible coatings containing colorants. Additionally the present disclosure provides an opacifying composition in inks for marking foods. The present disclosure also provides an opacifying composition for a variety of food products, and pet foods.

The present disclosure provides an opacifying composition, including for example an FD&C Blue #1 Lake, which provides enhanced whiteness and opacity to the white edible coatings of chewing gums and other confections. The opacifying compositions of the present disclosure can be used in, food products, confectionery products, edible inks, and coatings; soft or hard panned coated confections and can result in brighter color characteristics to soft or hard panned coatings having an opacifying composition in one or more layers of the edible coating. Additionally this opacifying composition can provide enhanced whiteness, opacity, and pastelling with other colorants in the color layers of edible coatings, in an ink formulation for marking, and in pet foods (kibbles, chews, wet, baked and coatings), foods (i.e., sauces, icings) and confections, such as gummies and chewing gums, without the use of titanium dioxide.

### 1. Definitions

The terms used in this specification generally have their ordinary meanings in the art, within the context of this disclosed subject matter and in the specific context where each term is used. Certain terms are discussed below, or elsewhere in the specification, to provide additional guidance to the practitioner in describing the compositions and methods of the disclosed subject matter and how to make and use them.

As used herein, the use of the word "a" or "an" when used in conjunction with the term "comprising" in the claims and/or the specification can mean "one," but it is also consistent with the meaning of "one or more," "at least one," and "one or more than one." Still further, the terms "having," "including," "containing" and "comprising" are interchangeable and one of skill in the art is cognizant that these terms are open ended terms.

The term "about" or "approximately" means within an acceptable error range for the particular value as determined by one of ordinary skill in the art, which will depend in part on how the value is measured or determined, *i.e.,* the limitations of the measurement system. For example, "about" can mean within 3 or more than 3 standard deviations, per the practice in the art. Alternatively, "about" can mean a range of up to 20%, preferably up to 10%, more preferably up to 5%, and more preferably still up to 1% of a given value.

As used herein, the term "artificial" refers to something that neither exists in nature nor is made from anything that exists in nature. The term "non-artificial" refers to something that is derived from plant, mineral, or biological sources.

As used herein, the term "pure" refers to a substance that is not mixed or adulterated with any other substance or material.

As used herein, the term "opacifying" refers to a substance added to a material in order to make the ensuing system opaque or white; the system or substrate appears neither transparent nor translucent. An example of a commonly used opacifying substance is titanium dioxide.

As used herein, the term "bluing" refers to the process of making white and opaque colors appear "whiter" due to the addition of a blue colorant. For example and not limitation, by reflecting more light, a white coating which includes a small quantity of a blue dye such as FD&C Blue #1 Lake or spirulina blue can appear "whiter."

As used herein, the term "Certified FD&C Colors" refers to colors that can generally be used in foods, drugs, and cosmetics.

As used herein, the term "Certified D&C Colors" refers to colors that can generally be used in drugs, and cosmetics, but not in foods.

As used herein, the term "colorant" refers to any substance that imparts color by absorbing or scattering light at different wavelengths.

Coloring materials used herein such as dyes and lakes may be soluble or insoluble matter.

A "pigment" is a colorant which manifests its shade by being dispersed. It is typically insoluble and can refer to a chromophore.

"Dyes" as used herein are colored, ionizing and aromatic organic compounds which show an affinity towards the substrate to which it is being applied. Dyes generally apply in a solution that is aqueous.

"Lakes" as used herein refer to insoluble pigments made by adsorbing a soluble dye onto an insoluble substrate. FD&C lakes are made by adsorbing or precipitating FD&C dyes onto a substrate of alumina hydrate. FD&C lakes can include, FD&C Blue #2 Lake, FD&C Green #3 Lake, FD&C Yellow 5 Lake, FD&C Yellow #6 Lake, FD&C Red #40 Lake, ,erythrosine lake, FD&C Blue #1 Lake, and, and mixtures thereof. Lakes can also include D&C colors and synthetic colorants such as quinolone yellow, amaranth or carmoisine.

"FD&C lakes" are defined under 21 CFR part 82.51 as any lake made by extending on a substratum of alumina, a salt prepared from one of the certified water-soluble straight colors by combining such color with the basic radical aluminum or calcium. Lakes are prepared from previously certified colors listed. Each lake made shall be considered to be a straight color and to be listed therein under the name which is formed as follows: the listed name of the color from which the lake is prepared; the name of the basic radical combined in such color; and the word "Lake." For example, the name of a lake prepared by extending the aluminum salt prepared from FD&C Blue No. 1 upon the substratum would be FD&C Blue No. 1 Aluminum Lake.

The term alumina refers to a suspension in water of precipitated aluminum hydroxide.

As used herein, "alumina hydrate" is the liquid form of precipitated aluminum hydroxide. Thus, the opacifying composition can be prepared through laking processes and finally used "as-is", in its dry form (powder) or dispersed into a solution such as a coating syrup, oil, an ink, confection, food or pet food composition.

The terms "color" and "color characteristics" are used interchangeably, and encompass color properties such as hue, chroma, and value, and color model system parameters used to describe these properties.

As used herein, the term "natural colorant" refers to any substance that exists in or is produced by nature or is obtained from a natural source. In certain aspects, the term "natural colorant" refers to a colorant that comprises one of more anthocyanins or other colorants obtained from a natural source, *e.g.,* a vegetable, a plant, algae, or a flower (or a flower petal).

As used herein, the term "blue colorant" refers to a colorant that reflects light at wavelengths in the region of 450 to 495 nanometers and has a maximum UV/VIS wavelength absorbance ranging from 600 to 650 nanometers.

As used herein, the term "green colorant" refers to a colorant that reflects light at wavelengths in the region of 490 to 570 nanometers and has a maximum UV/VIS wavelength absorbance ranging from 380 to 440nanometers or from 600 to 680 nm nanometers.

As used herein, the term "yellow colorant" refers to a colorant that reflects light at wavelengths in the region of 570 to 585 nanometers and has a maximum UV/VIS wavelength absorbance ranging from 410 to 440 nanometers.

As used herein, "maximum absorbance," "lambda max," or "λₘₐₓ," refers to the wavelength in nanometers at which the maximum fraction of light is absorbed by a substance, colorant and/or colorant composition.

As used herein, "FD&C Blue No. 1" includes the various names given to the identical synthetic blue colorant, Brilliant Blue FCF and European Union E133. The lambda max of FD&C Blue No. 1 is 630 nm.

As used herein, "food product" or "food product composition" includes ingestible products including but not limited to human foods, sweet or savory food product, such as fruit snacks, chips/crisps, extruded snacks, ice cream, sauces, icings, frostings, tortilla/com chips, popcorn, pretzels, nuts, granola/muesli bars, breakfast bars, energy bars, fruit bars, other snack bars, and combinations thereof, animal or pet foods (chews, wet, dry or coatings), pharmaceutical products, and consumer products.

As used herein, the term "confectionery product" or "confection" refers to a sweet or dessert food product. Confectionery products with surfaces suitable for soft or hard panned coating, and application of edible inks can include, but are not limited to, candies (hard and soft), compressed mints, chewing gums, gelatins, chocolates, fudge, fondant, licorice, jellybeans, taffy, starch based centers, and combinations thereof. As used herein, the term "weight percent" or "wt.%" is meant to refer to the quantity by weight of a component in a material (e.g., a coating composition) as a percentage of the total wet weight of the material (*i.e.,* prior to being dried). The weight % for the low dye lake is based on a dry powdered lake. Then the weight percent can also refer to how much of this pigment (low dye lake) would be used in various carriers or in finished products.

"Hue" refers to the color property that gives a color its name, for example, red, orange-red, blue, violet, etc. "Chroma" is a color property indicating the purity of a color, where higher chroma is associated with greater purity of hue and less dilution by white, gray, or black.

"Value" is a color property indicating the lightness or darkness of a color, where higher value is associated with greater lightness.

The term "lightness" as used herein is the perceived whiteness of a particular material when measured under a standard illuminant.

The term "low-dye lake pigment" refers to the specific concentration of the dye used within the lake itself. For example, Blue 1 Aluminum Lake is typically available commercially in the following ranges 10-12% dye, and 20-24% dye, 36-42% pure dye concentrations. In this case the low dye lake opacifying composition refers to dye in the range of 0.0001% (1 ppm) to 5% pure dye and 99.9999% to 95% alumina hydrate. The low dye lake opacifying composition using one or more low dye lake pigments can be added to a confectionery or food product to opacify or give an appearance of white to the product.

As used herein, "as is," means no aqueous suspending medium is required or used with the opacifying composition.

As used herein, "food grade," refers to any substance, metal ion and/or colorant composition that is of a grade acceptable for use in edible food products.

As used herein, "syrup" refers to a liquid material comprising at least a sugar or polyol and water. In certain aspects, a syrup can include a sugar syrup where a sugar is dissolved in the water in an amount of at least 60% sugar solids by weight of the syrup. In certain aspects, other components can also be present within the sugar syrup. For example, and not by way of limitation, a colorant composition of the present disclosure can be present within a sugar syrup.

As used herein, "coating layer" refers to a layer obtained by one application of a coating material, *e.g.,* a sugar syrup, or dry charge to a substrate, *e.g.,* a food product or chewing gum, being coated. Typical coatings or shells may comprise sugars, polyols, fats, yogurt and combinations thereof. Additionally, the coatings of the food products may have a glaze coating comprising shellac, wax, or combinations thereof.

As used herein, "edible coating" refers to the total amount of coating material, *e.g.*, one or more syrups or dry charges, applied to a substrate, *e.g.*, a food product, upon completion of a coating process. In certain aspects, the coating process can include one or more steps of applying a coating material, *e.g.*, a syrup containing one or more colorant compositions of the present disclosure, to the substrate.

The term "reflectance" as used herein with respect to a material is the percentage of any incident electromagnetic radiation that reflects back from a surface. Reflectance is a function of wavelength, and the reflectance of a material can vary across the electromagnetic spectrum. A material that is a perfect reflector at a particular wavelength has a reflectance of 100% at that wavelength.

### 2. Opacifying Compositions

The present disclosure relates to opacifying compositions that include one or more low-dye FD&C lake pigments.

Aluminum hydroxide (also referred to as alumina (dried aluminum hydroxide) is a white, odorless, tasteless, amorphous powder consisting essentially of aluminum hydroxide (Al₂ O₃· XH₂ O) and its hydrated forms. It is an opacifying ingredient that is allowed in the US as a color additive for drugs according to 21 CFR 73.1010. Aluminum hydroxide also forms the substrate for the FD&C Lake color additives. A lake is an insoluble pigment made by adsorbing a soluble dye onto an insoluble substrate. FD&C lakes are made by adsorbing or precipitating FD&C dyes onto a substrate of alumina hydrate. The resulting pigment is dispersed throughout the food product rather than dissolved in it.

A dye is a chemical that shows color when it is dissolved. Dyes are primarily water soluble. Dyes are commercially available in a dry form (powder) and also as a liquid. In contrast, a lake pigment is an insoluble material that colors by dispersion. Lakes are basically a pigment which has been manufactured from a dye by precipitating a soluble dye with a metallic salt. The resulting pigment is called a lake pigment. Lakes are typically produced from the FD&C Dyes and are oil dispersible (but generally not oil soluble) and as such they can be mixed with oils, fats and sugars and are commonly used in non-water dependent systems. They can also be dispersed in and with other carriers such as propylene glycol, glycerin and liquid sucrose (water and sugar), or dry carriers such as maltodextrin, calcium carbonate, starch, aluminum hydroxide.

Lakes have been defined by the FDA as the aluminum or calcium salts of FD&C water-soluble dyes extended on a substratum of aluminum hydroxide). Thus, FD&C Aluminum Lakes are insoluble pigments produced from water-soluble FD&C dyes or other food grade dyes. Lakes are insoluble materials and impart their colors by dispersion. Lakes are oil dispersible, but generally not oil soluble and thus can be mixed with oils and fats and other non-water dependent systems. Lakes are used to color the outside of products such as an opaque candy or fat-based products such as chocolate or compound coating. Oil-based lake dispersions can be used to color fat-based ingredients such as chocolate/compound coating, and lakes can also be dispersed into sugar or polyol solutions for panning applications. Lakes in confections are commonly used in the form of fine dispersions or suspensions. Lakes are also added and dispersed throughout food products, such as chewing gums and confections, pet foods, and edible inks.

As embodied herein, an opacifying composition can be formed by creating a very low dye containing lake from one or more FD&C lakes or colorants to make a product or composition appear white. For example and not limitation, the pure or low-dye FD&C lake can include one or more of, FD&C Blue #2 Lake, FD&C Green #3 Lake, FD&C Yellow5 Lake, FD&C Yellow #6 Lake, FD&C Red #40 Lake, and FD&C Blue #1 Lake, or mixtures thereof. Thus, the presently disclosed subject matter provides opacifying compositions for confectionery products, coatings, or edible inks comprising low-dye FD&C lakes as opacifiers. In particular aspects , the low-dye FD&C lake can be FD&C Blue #2 Lake, FD&C Green #3 Lake, FD&C Yellow 5 Lake, FD&C Yellow #6 Lake, FD&C Red #40 Lake, FD&C Blue #1 Lake, or be a lake of a synthetic colorant such as carmoisine, erythrosine or amaranth where allowed by law.

Lakes are produced in specific concentrations of the dye used. By way of example and not limitation Blue 1 Aluminum Lake is commercially available in a low dye amount, containing generally 8-10% dye. A mid-dye amount contains about 20-24% dye, and a high-dye amount containing about 35-42% dye. Surprisingly, by way of example and not limitation, the present disclosure provides for a Blue 1 Aluminum Lake that is available in a very low dye amount, containing 0.0001 wt.% to about 5 wt.% dye in an opacifying composition, which provides the desired opacity and enhances color or whiteness to pet foods, food products, confectioneries, chewing gums, edible coatings and inks. By way of example, the opacifying composition contains FD&C Blue 1 Lake from about 0.0001% to 1%, from about 0.0001% to 0.3%, or from about 0.0001% to 0.1% by weight of the opacifying composition. Alternatively, the opacifying composition contains FD&C Yellow 5 lake 0.0001% to 2%, 0.0001% to 1%, or from about 0.0001% to 0.5% by weight of the opacifying composition.

Blends of different lakes and other edible colorants and pigments can be used to produce a variety of colors, and various carriers can be used to disperse the colorants. For example and not limitation, lakes can be dispersed or suspended in carriers such as maltodextrin, aluminum hydroxide propylene glycol, glycerin, oil, and liquid sucrose (water and sugar), polyols and syrups, and inks for marking food products or confections. Dispersions of lakes are available in different carriers, which are related to their application: oil bases for fat based coatings, crackers and fillings, snack foods, and wax products; propylene glycol or glycerin for chewing gums, hard candies, sugar coatings, and sugar syrups. Lakes are widely used in dry mix beverages, pressed mints, bakery products, snack foods and seasonings, icings, frostings, confections, confectionery coatings, chewing gum, hard candy, foods and pet foods. Thus, the spectrum of FD&C lake usage is diverse.

Food producers globally can use FD&C type lakes subject to food color regulations. It is known that the particle size and morphology of the lake pigment is important to their coloring capacity or tinctorial strength. Generally, the smaller the particle size, the higher the tinctorial strength of lakes due to the increased surface area for reflected light. Lakes are formed by the precipitation and adsorption of a dye onto an insoluble base or substrate. The base for the FD&C Lake is generally aluminum hydroxide. The method of preparation of the aluminum hydroxide and the conditions under which the dye is added or adsorbed (how the lake is dried and ground) determines the shade, particle size, dispersability and tinctorial strength. Other important variables include temperature, concentration of reactants, final pH, and the speed and type of agitation. The shade or hue of a lake varies with the pure dye content. The use of insoluble certified lakes has advantages when coloring pharmaceutical dosage forms, including faster drying stages, reduced mottling, fewer application states and improved color reproducibility (*See* Allam, et al., Colorants-The Cosmetics for the Pharmaceutical Dosage Forms, Int. J. Pharmacy and Pharm. Sci., 3, Supp. 3, 13-21, 2011).

The present disclosure provides for an opacifying composition of a low dye lake as is or dispersed in a liquid or dry carrier. In one aspect, the opacifying composition contains water soluble or water insoluble coloring material and aluminum hydroxide. In another aspect, the opacifying composition is formed into a lake by combining the coloring material (i.e, dye) and alumina hydrate; alumina hydrate is the liquid form of precipitated aluminum hydroxide which can be prepared through laking processes and finally used as is (no aqueous suspending medium is required), in its dry form (i.e., powder) or dispersed into a dry or liquid carrier such as a syrup, sugar, oil, an ink, confection, or food or pet food composition.

The lake particles of the opacifying composition can range in size. The finer the particle, the less chance of speckling in the finished product. Lakes can range in particle size including 0.5 to 1 microns. Generally, particle size can be categorized as follows in Table 1.

**Table 1.**

| **Description Term** | **Particle Size Range Mesh Opening Size (microns)** | **Mesh Size Number** |
|---|---|---|
| Very Coarse | > 1000 | 2-10 |
| Coarse | 355 -1000 | 20 - 40 |
| Moderately Coarse | 180 - 355 | 40 - 80 |
| Fine | 125 - 180 | 80 - 120 |
| Very Fine | 90 - 125 | 120 - 200 |

When available in a dry form, the morphology of the lake particle comprised in an opacifying composition can be spherical, angular, dendritic, dish-shaped, acircular, and flaked, alone or in any combination. These different morphologies can form agglomerates. The agglomerates can comprise a single morphology or can be a multimedia agglomerate (variety of morphologies). In an aspect, the lake is comprised of agglomerates of flakes or spheres. In another aspect, the lake is a multimedia agglomerate comprised of flakes and spheres.

The present disclosure provides for opacifying compositions comprising from about 0.0001 to 5.0 wt.%, or from about 0.0001 to 2 wt.%, from about 0.0001 to 1.0 wt. % dye, from about 0.0001 to about 0.5%, from about 0.0001 to about 0.3%, or from about 0.0001 to about 0.1% dye; and from about 95.0 wt.% to about 99.9999 wt.%, or from about 98.0 to about 99.9999 wt.% aluminum hydroxide. In another aspect, the opacifying composition comprises one or more powdered, low-dye FD&C lakes or colorants with the dye present in an amount of from about 0.0001 to about 1.0 wt.% and aluminum hydroxide present in an amount from about 99.9999 wt.% to about 99 wt.% based on the total weight of the opacifying composition.

An objective of the present disclosure is to provide lakes having a very low dye concentration with aluminum hydroxide, that can be used an opacifying composition in food products, confectionery products, coatings, and edible inks. The present disclosure provides an opacifying composition having a very low dye content with aluminum hydroxide hydrate which yields a white or opaque appearance to confections, pet foods, foods, chewing gum, coatings, and inks without the use of traditional whiteners or opacifiers such as titanium dioxide. The opacifying compositions of the present disclosure which are oil dispersible can be mixed with maltodextrin, alumina hydrate, oils, fats, sugars, propylene glycol, glycerin, polyols, and alcohol or water based edible ink formulations that are titanium free to give a white or opaque appearance to confectionery coatings and edible inks.

The present disclosure provides opacifying compositions containing one or more very low dye lake pigments. If the low dye lake is present in a liquid suspending medium, the opacifying composition can be formed with one or more low-dye FD&C lakes or colorants from about 0.5 wt.% to about 50.0 wt.%, or from about 1 wt.% to about 30 wt.% by weight of the suspending medium.

Preferably, the opacifying composition contains about 99% to about 99.9999% aluminum hydroxide and a dye from about 1% to .0001% by weight of the opacifying composition.

The opacifying composition can be blended with other carriers and colorants to opacify or whiten a product or composition. As embodied herein, the opacifying composition can comprise a suspending medium for the low dye lake. For example and not limitation, the suspending medium is liquid, and can be a sugar or sugar-free syrup, permitting the opacifying composition to be applied in layers of a coating on a core. Oil, glycerin, and propylene glycol can be used in edible inks with alcohol or aqueous solvents and varying bodifying agents such as shellac, carboxymethylcellulose (CMC), hydroxypropylmethylcellulose (HPMC), zein, sugar, gum arabic, etc. Alternatively, the opacifying composition can comprise aluminum hydroxide hydrate, and dry carriers such as maltodextrin, starches, calcium carbonate, aluminum hydroxide and exists in a dry, powdered form. For further example, the opacifying composition can be used in a coating layer comprising a dry charge, or sugar syrup of a confectionery coating or polyol syrup for coating a chewing gum.

Coating syrups generally comprise one or more non-artificial sugars and/or sugar alcohols and water. Although artificial sweeteners can be included in some aspects, in others, they are desirably excluded. Any non-artificial sugar that will readily crystallize can be used in the sugar syrups, and suitable examples include sucrose, glucose, and dextrose. **In** some aspects, the non-artificial sugar desirably comprises sucrose. Additionally or alternatively, sugar alcohols, such as polyols, can be used singly as a syrup, or in the sugar syrups.

As embodied herein, the coating syrups and liquid ink preparations of the present disclosure are free of titanium dioxide. For example, the use of an opacifying composition containing a very low dye lake can result in sufficient opacity rendering the use a whitening substance (such as titanium dioxide) as unnecessary. The opacifying composition may be blended with other opacifying agents such as calcium carbonate and phosphates. The opacifying composition may be used in an opacifying layer or the colorant layers of a coated substrate to ensure that subsequent color layers of the coating exhibit their true colors or pastel shades if desired. Thus, in certain aspects, the opacifying composition is applied in to a hard-panned confectionery coating wherein both the opacifying composition and the edible coating are free of titanium dioxide. In other words, additional layers of the hard or soft panned coating, e.g., one or more color layers as described further below, can also be free of titanium dioxide such that the entire hard panned coating does not contain titanium dioxide. The low dye lake can be added to liquid ink preparations and deposited as a solid on a food or drug surface, to leave a desirable mark after the liquid evaporates. The low dye lake can also be incorporated within a pet food, food or confectionery composition to create a white or opaque appearance.

In certain aspects, the coating syrups of a hard or soft-panned coated substrate can contain at least about 60 wt.% solids, or at least about 65 wt.% solids, or at least about 70 wt.% solids. The sugar syrup can contain less than about 85 wt.% solids, or less than about 80 wt.% solids. In some aspects, the coating syrup contains from about 65 wt.% to about 80 wt.% solids, or from about 70 wt.% to about 80 wt.% solids. In aspects using sucrose in a coating syrup, the sucrose sugar syrups can be at least about 60° Brix, or at least about 65° Brix, or at least about 70° Brix. The sucrose sugar syrup can be less than about 85° Brix, or less than about 80° Brix. In some aspects, the sucrose sugar syrup is from about 65° Brix to about 80° Brix, or from about 70° Brix to about 80° Brix.

In an alternative aspect, the coating of a substrate can comprise a polyol syrup, permitting the coating composition to be applied in layers to a core. Although non-artificial sugars can be included in some aspects, in others, they are desirably excluded. Any suitable polyol may be used in the polyol syrup, including but are not limited to sugar alcohols such as sorbitol, mannitol, xylitol, hydrogenated starch hydrolysates, lactitol, maltitol, erythritol, isomalt and combinations thereof.

As noted above, the soft or hard panned coating can be formed from multiple sugar syrup layers, and some layers, e.g., one or more layers, can include an opacifying composition. The low dye lake may be added as part of a dry charge common in confectionery and gum coating applications. Similarly, at least some of the sugar syrup layers, e.g., one or more color layers, can include one or more natural colorants. As embodied herein, a particular sugar syrup layer can comprise an opacifying composition. In certain aspects, the hard panned coating can include one or more layers comprising an opacifying composition, and one or more color layers comprising a colorant. The one or more color layers can be free of an opacifying composition. For example, and not limitation, the one or more layers containing the opacifying composition can be disposed nearest to the edible core of a hard panned confection. Additionally the opacifying composition may be used in the edible center, or in the color layers with or without an additional colorant or opacifying agent present. The opacifying composition may be used in an ink for marking foods and drugs, or incorporated within a pet food, food, confectionery or chewing gum composition to elicit a white or opaque appearance.

Any colorant suitable for food use can be used with the opacifying compositions described herein. As embodied herein, the colorant can be non-artificial or artificial. The colorant can provide any color, as known in the art, and is not limited to the particular colors described herein. For the purpose of example and not limitation, artificial colorants approved for use in food in the U.S. and/or the European Union (EU designation in parentheses) or other countries including Codex regulated countries, and include FD&C Blue No. 1 (Brilliant Blue FCF E133), FD&C Blue No. 2 (Indigotine E132), FD&C Green No. 3 (Fast Green FCF E143), FD&C Red No. 40 (Allura Red AC E129), FD&C Red No. 3 (Erythrosine E127), FD&C Yellow No. 5 (Tartrazine E102) and FD&C Yellow No. 6 (Sunset Yellow FCF E110). Some additional artificial colorants approved for use in the European Union and elsewhere such as Codex include Quinoline Yellow E104, Carmoisine E122, Ponceau 4R E124, Patent Blue V E131 and Green S E142. Useful non-artificial food colorants are also known in the art, such as, for example, caramel coloring (E150), annatto (E160b), Chlorophyllin (E140), Cochineal (E120), Betanin (E162), Turmeric (curcuminoids, E100), Saffron (carotenoids, E160a), paprika (E160c), Lycopene (E160d), beta carotene, indigo, and anthocyanins (E163) , and fruit and vegetable juices and extracts thereof, such as anthocyanin-containing colorants and colorants based on spirulina, purple carrot, and radish colorants. Combinations of artificial and/or non-artificial colorants can be used, *i.e.,* two or more artificial colorants, one or more non-artificial colorants with one or more artificial colorants, or two or more non-artificial colorants can be used. Additionally other opacifying agents including calcium carbonate, starches and phosphates such as tri calcium phosphate may also be present in the opacifying compositions.

It will be understood that colorants are often available for use in food as either dyes, lakes, or pigments. Some dyes are soluble in water, such as anthocyanins, and provide color via dissolution in a food matrix. Lakes and pigments, on the other hand, are not soluble in oil or water. Lakes and pigments provide color via liquid dispersion into sugar syrup, polyol syrup, glycerin, oil, propylene glycol, and water or dry carriers/dispersion such as maltodextrin or aluminum hydroxide. Such dispersed lakes and pigments may be used in edible ink preparations for marking foods and drugs, or incorporated within food or confectionery compositions to elicit a white or opaque appearance. The present disclosure provides for an opacifying composition containing a lake with a very low amount of dye that provides the desired opacity and enhanced color or whiteness to pet food, foods, confectioneries, (i.e., chewing gum) as well as edible coatings and edible inks.

### 3. Confections

The opacifying composition of the present disclosure contains a low dye lake as a dry form (powder) or as a liquid or dry form with other carriers for use in a pressed mint.

Preferably, the opacifying compositions of Table 2 is from about 0.5-2.0% by weight of the pressed mint, and is used as a powder.

**Table 2 - Pressed Mint**

| | **Ex. 1** | **Ex.2** | **Ex. 3** |
|---|---|---|---|
| Sucrose | 98.55 | 98.01 | 98.60 |
| Magnesium Stearate | 0.95 | 0.99 | 0.90 |
| Opacifying Composition: (powdered low dye lake) 0.0001% FD&C Green No. 3 + 99.9999% aluminum hydroxide | -- | -- | 0.5 |
| Opacifying Composition: (powdered low dye lake) 0.05% FD&C Blue No. 1; and 99.95% aluminum hydroxide | 0.5 | -- | -- |
| Opacifying Composition: (powdered low dye lake) Quinoline Yellow E104 (0.0001%); and 99.9999% aluminum hydroxide | -- | 1.0 | -- |
| TOTAL | 100% | 100% | 100% |

Example 1 produces a whiter, more opaque compressed mint. Example number 2 produces a white, more opaque compressed mint. Example3 produces a pastel green. No titanium dioxide was used.

Alternatively, the opacifying compositions of Table 3 is used from about 0.5 to about 5.0%, by weight of a chewing gum. The opacifying compositions are dispersed in a liquid or dry medium.

**Table 3 - Chewing gum**

| **Ingredients** | **Ex. 4** | **Ex. 5** | **Ex. 6** |
|---|---|---|---|
| Gum Base | 27.01 | 27.01 | 27.01 |
| Sorbitol | 60.00 | 55.03 | |
| Sugar | -- | -- | 53.44 |
| Mannitol | 1.00 | -- | 3.00 |
| Lycasin/Glycerin | 4.44 | 8.44 | 8.44 |
| Sweetener | 0.80 | 0.80 | 0.80 |
| Flavor | 1.75 | 1.75 | 1.75 |
| Opacifying Composition: (powdered low dye lake) FD&C Blue #1 (0.0001%) and 99.9999% aluminum hydrate dispersed in an aqueous suspending medium. | 5.0 | -- | -- |
| (Dispersion concentration: 20% opacifying composition in 80% glycerin.) | | | |
| Opacifying Composition: (powdered low dye lake) 0.001% FD&C Blue #1, 5% spirulina blue, and 90% aluminum hydrate dispersed in an aqueous suspending medium. | | 6.67 | -- |
| (Dispersion concentration: 15% opacifying agent and 85% liquid sorbitol) | | | |
| Opacifying Composition: (powdered low dye lake) 0.001% FD&C Red #40 and 99.999% aluminum hydrate dispersed an aqueous suspending medium. | | | 5.56 |
| (Dispersion concentration: 18% opacifying agent and 78% sucrose) | | | |
| TOTAL | 100% | 100% | 100% |

### 4. Edible Inks r (not part of the present invention)

The edible inks, not part of the invention are capable of being used in a printing process to form an image layer on an edible or inedible substrate. The image layer on the substrate may include a single color or multiple colors, and should have acceptable definition, tonal value and registration to be useful as a decoration. The edible inks may be aqueous and/or alcohol based and contain suitable bodifying agents and film formers known in the art. The opacifying composition contains the low dye lake at concentrations of between 10 and 60% and preferably in the range of 30-40% of the low dye lake. Additional colorants and opacifying agents may also be present in the opacifying composition, including but not limiting to calcium carbonate, starches and phosphates such as tri calcium phosphate or other food grade ingredients to opacify or add a white color for marking food, confectionery, or pharmaceutical products.

| Ingredient | **Ex. 7** | **Ex. 8** | **Ex. 9** |
|---|---|---|---|
| Edible ink liquid (aqueous or non-aqueous including film formers and necessary ingredients used to make edible inks) | 70 | 60 | 60 |
| Low dye lake (0.0001% dye) | 30 | 40 | 30 |
| Calcium carbonate | -- | -- | 10 |
| Total | 100 | 100 | 100 |

### 5. Soft and Hard Panned Coatings

The coating compositions of the presently disclosed subject matter can be applied to the surface of various food products, including confectionary products such as candies (hard and soft), compressed mints, chewing gums, gelatins, chocolates, fudge, fondant, licorice, and taffy. The low dye lake may be added as a dry charge singly or with other ingredients.

In particular aspects, the coating composition is applied to the edible core of a soft or hard panned confectionary product, *e.g.,* a dragée type or jelly bean type confectionary product. A soft or hard panned confectionary product can comprise a center edible core and at least one coating layer containing crystallized sugar, e.g., from a sugar syrup. The cores can then be coated with successive layers of sugars or other substances such as polyols, gums and non-artificial polymers, that can further include one or more coating compositions, e.g., opacifying compositions, of the present disclosure. For example, and not by way of limitation, the edible core can comprise chocolate. In certain aspects, the surface of the soft or hard panned confectionary product can further comprise a polish coating.

The soft or hard panned coating can be applied to any desired edible core. In some aspects, the edible core can comprise a non-artificial center, such as a nut, groundnut, nut meat, nut paste, dried or infused fruit piece, or dried fruit paste. Or, the edible core can comprise a confection, such as a boiled sugar syrup, caramel, nougat, taffy, toffee, jelly bean or gummy type center, fondant, chocolate, confectionery coating, or combinations of these. Alternatively, the edible core can comprise a grain-based item, such as a cookie, pretzel, biscuit, wafer, cracker, or other baked, crisped, or puffed material. In some aspects, the edible core can comprise a non-artificial center, confection, or grain-based item which is then coated with a confection.

The soft or hard panned coatings provided herein use low-dye lake pigments as opacifiers, singly or in combination with other opacifiers such as rice starch, calcium carbonate, etc. which can also create an opacifying layer that, when combined with a color layer, results in colors that closely approximate the same color as a coating created using conventional formulations for hard panned coatings, *i.e.,* comprising opacifying compositions comprising whitening substances such as titanium dioxide (TiO₂) or rice starch.

In particular aspects, as embodied herein, the target color can be the resulting color if color layers of the same color variant are applied over an opacifying layer having a conventional opacifying composition, *e.g.*, containing titanium dioxide from about 0.01 to 0.1%, or calcium carbonate from about 0.01% to about 1.0 wt.%.

### 6. Methods of Manufacturing Soft or Hard Panned Coatings

As embodied herein, the coating composition, *e.g.*, an opacifying composition, can be applied to the desired edible core according to conventional soft or hard panning processes as known in the art. Such processes are described, for example, in "Sugar Confectionery and Chocolate Manufacture," R. Lees and E.B. Jackson, Chemical Publishing Company, February 7, 1975, and "Industrial Chocolate Manufacture and Use," editor, S.T. Beckett, Blackie & Son Ltd., Glasgow, 1988, each hereby incorporated herein by reference in its entirety. Panning processes can be driven by the equipment utilized to perform them, which can be dry equipment or slurry equipment, both types being commercially available from, e.g., Ets Dumoulin & Cie, Tournan-en Brie, France, KOCO Food Tech, Inc., Phoenix, MD and Loynds International, Ltd., Poulton Le Fylde, England.

As will be understood in the art, panning is an industrial process for preparing coated edible products, such as confections and pharmaceuticals. Typically, the term "panning" means the iterative application of sugar-based coatings, such as, *e.g.*, sucrose or dextrose, to masses of edible products to produce coated products. In a panning process, multiple applications of a highly concentrated sugar syrup are used to build up the uncolored portion of a sugar shell. This is followed by multiple applications of a concentrated sugar syrup containing colorant. The panning process comprises the repetitive application of thin layers of a coating solution or composition onto an intermixed mass of centers, while mixing the mass of centers, and the drying of each layer of coating solution or composition during which the sugar in the coating crystallizes between the application of layers.

In certain aspects, the methods for manufacturing hard panned confectionary products can comprise the deposition of a plurality of sugar syrup layers, for example between about 5 and about 45, by a succession of phases of application and drying carried out, for example, in a coating pan. Multiple applications of a highly concentrated sugar syrup can build up a sugar coating on an edible product center. In certain aspects, one or more inner layers can comprise uncolored sugar followed by one or more applications of a concentrated sugar syrup containing a colorant. Additional non-limiting examples of methods for producing hard panned confectionaries are provided in International Patent Publication Nos. WO 2014/150438 and WO 2014/152417, the disclosures of which are hereby incorporated herein by reference in their entireties.

Prior to the application of one or more sugar syrup layers, the surface of the edible core can be prepared according to known techniques in the art such as gumming, isolating, and stabilizing. For example, in gumming, layers of a high glucose content syrup containing a gum, gelatin, starch, or dextrin can be applied directly to the edible core alternately with a fine crystalline sugar to fill irregularities and smooth ridges. The smoother surface that is obtained can facilitate even coating and adherence of the later applied sugar syrup layers. Isolating is a process of creating a barrier to lipid, water, or non-artificial sugar migration between the edible core and the sugar syrup layers, and can be effected by applying a film containing gelatin or gum to the core in a process similar to gumming. Stabilizing can be required to strengthen a fragile edible core for subsequent hard pan coating with sugar syrups. A cookie core, for example, can be prevented from crumbling during hard pan coating by first being coated with a melted fat, then isolated with a gum-containing film. Preparation of the surface of the edible core can also be completed with one or more applications of a sucrose sugar syrup.

In some aspects, sugar syrups can be applied as coating layers directly to the surface of an edible core. In other aspects, sugar syrups can be applied as coating layers to a prepared surface of an edible core, wherein the surface has been prepared according to a known technique including, but not limited to, gumming, isolating, and stabilizing. In still other aspects, sugar syrups can be applied as coating layers to a crystallized sugar syrup layer overlying any number of coating layers overlying the edible core. As the phrase that follows in quotation marks is used herein, the application of a sugar syrup as a coating layer "to an edible core" does not necessarily denote that the sugar syrup is applied directly to the edible core. Rather, a sugar syrup that is applied as a coating layer "to an edible core" can be applied directly to the surface of the edible core, or to a prepared surface of an edible core, or to a crystallized sugar syrup layer overlying any number of coating layers overlying the edible core, within the meaning of the phrase.

Typically, fewer than 45, or fewer than 25, or fewer than 20, or fewer than 15 sugar syrup layers can be provided in the hard panned coatings. In certain aspects, the layers can be alternated between one or more layers of sugar syrups containing low-dye lake pigments and one or more layers of sugar syrups not containing low-dye lake pigments. For example, and not by way of limitation, one or more opacifying layers prepared from a sugar syrup containing low-dye lake pigment but not containing a colorant can be disposed nearer to an edible core than one or more color layers prepared from a sugar syrup not containing low-dye lake pigment but containing a colorant. The low dye lake can be added as part of a dry charge with sugars and carriers. Often a dry charge of powdered sugar or dextrose monohydrate may be used. A dry charge may be used to build up a coating, but then finished with a straight syrup to obtain a hard shell. As such, in the opacifying layers, low-dye lake pigments can enhance the opacity, allowing the layers to better mask the color of the edible core. In certain aspects, the one or more opacifying layers can be adjacent to an edible core. Alternatively, one or more intermediate layers can be disposed between the opacifying layers and the edible core, as described above. One or more color layers with sugar syrup and a colorant can be applied over the low-dye lake pigment-containing opacifying layers and these color layers can be used to impart a coloring to the coating. Additionally the low dye lake pigment may be added to the color layers containing any colorant to create pastel type shades in the coating layers.

Once hardened, the hard panned coating can have a thickness of any desired range to produce the desired crunch, color, texture for the coated product. By way of example and not limitation, the hard panned coating can have a thickness of approximately about 5.0mm, about 3.0 mm, about 2.5 mm, about 2.0 mm, about 1.5 mm, or no more than about 1.0 mm. The hard panned coating can also have a thickness of greater than about 0.1 mm or greater than about 0.2 mm, or greater than about 0.3 mm, or greater than about 0.4 mm, or greater than about 0.5 mm. In some aspects, the hard panned coating can have a thickness of from about 0.01 mm to about 5.0 mm, or from about 0.01 mm to about 3.0 mm, or from about 0.2 mm to about 2.5 mm, or from about 0.3 mm to about 2.0 mm, or from about 0.4 mm to about 1.5 mm, or from about 0.5 mm to about 1.0 mm.

For the coating compositions set forth in Table 5 below, the opacifying composition is dispersed in an aqueous medium and is present from about 10 wt.% to about 40 wt.% of the coating.

**Table 5 - Coatings**

| | **Ex. 10** | **Ex. 11** | **Ex. 12** |
|---|---|---|---|
| Sugar Syrup | 60.0 | 70.0 | -- |
| Polyol Syrup | | | 80.0 |
| Opacifying Composition: 0.0001% FD&C Blue No. 1 and 99.9999% aluminum hydroxide hydrate dispersed in an aqueous suspending medium. | 40.0 | | -- |
| (Dispersion Concentration: 20% opacifying composition, 80% propylene glycol ) | | | |
| Opacifying composition: 40% of a low dye 0.05% pure dye FD&C Blue No. 1 lake dispersed in 60% sugar syrup (aqueous suspending medium). | -- | 30.0 | -- |
| Opacifying composition: 30% of low dye 0.01% Quinoline Yellow E104 and 99.99% aluminum hydroxide dispersed in 70% polyol syrup (aqueous suspending medium). | -- | -- | 20.0 |
| TOTAL | 100% | 100% | 100% |

Examples 10 and 11 produces a white, more opaque color without titanium dioxide to the coating. Example 12 provides a pastel yellow coating.

## Claims

1. An opacifying composition for confectioneries and foods comprising a lake pigment
wherein the lake pigment comprises
a. 0.0001 wt.% to about 5wt. % of one or more dyes, based on the total weight of the opacifying composition; and,
b. 99.9999 wt.% to about 95 wt.% aluminum hydroxide, based on the total weight of the opacifying composition.

2. The composition of claim 1, wherein the one or more dyes comprises a FD&C lake selected from the group consisting of, FD&C Blue #2 Lake, FD&C Green #3 Lake, FD&C Yellow 5 Lake, FD&C Yellow #6 Lake, FD&C Red #40 Lake, FD&C Blue #1 Lake, and mixtures thereof.

3. The composition of claim 1, further comprising a natural colorant.

4. The opacifying composition of claim 1 or claim 3, wherein the lake pigment is selected from the group comprising Blue # 1 lake pigment, Yellow # 5 lake pigment, and combinations thereof, and wherein the one or more dyes is present in an amount of from about 0.0001 wt.% to about 2 wt. % weight of the opacifying composition.

5. A coating composition, comprising one or more syrup layers, wherein at least one layer comprises an opacifying composition of claim 1 or claim 3 comprising one or more FD&C dyes from about 0.0001 wt.% to about 1.0 wt.% based on the total weight of the opacifying composition, and wherein the opacifying composition is present from about 0.05 wt.% to about 20.0 wt.% of the coating composition.

6. The coating of claim 5, wherein the opacifying composition
A) is present as a pre-coating sugar syrup layer, or
B) is added by a dry charge, or
C) is present in two or more of the sugar syrup layers.

7. The coating of claim 5, wherein
A) one or more of the sugar syrup layers do not contain the opacifying composition, or
B) wherein the syrup solution contains a non-artificial sugar selected from the group consisting of sucrose, glucose and dextrose, or
C) wherein the coating does not contain titanium dioxide.

8. A hard panned confection, comprising an edible core coated with a hard panned coating, comprising one or more sugar syrup layers, wherein at least one layer comprises an opacifying composition of claim 1 having one or more dyes from about 0.0001% wt.% to about 2.0 wt.% based on the total weight of the opacifying composition, and wherein the opacifying composition is present from about 5.0 wt.% to about 20.0 wt.% of the hard panned coating composition.

9. The hard panned confection of claim 8, wherein the edible core comprises an edible material selected from the group consisting of a non-artificial center, a confection, a chewing gum, a grain-based item, and combinations thereof, or wherein the edible core comprises chocolate.

10. The hard panned confection of claim 8, wherein the at least one opacifying composition is disposed nearest to the edible core it can be there, or it could be in any of the layers of a coating process including the outermost coloring layers, the wax layer or the edible ink.

11. A method of coating an edible core with a hard panned coating, comprising:
a) applying a first coating composition comprising the opacifying composition of claim 1 dispersed in a sugar syrup in an amount of from about 1wt.% to about 30 wt.% based on the total weight of the first coating composition to provide at least one layer of the hard panned coating; and
b) applying a second coating composition comprising sugar syrup but not comprising an opacifying composition to provide at least one additional layer of the hard panned coating.

12. The method of claim 11,
A) further comprising at least partially drying the layers after each of steps a) and b); or
B) wherein the first coating composition is applied to a prepared surface of the edible core; or
C) wherein the second coating composition further comprises a natural colorant; or
D) wherein the first coating composition and the second coating composition do not comprise titanium dioxide.

13. Use of the opacifying composition of claim 1 for providing an opaque white appearance to foods, pet foods, coatings, edible inks, confectionery products and combinations thereof.

## Patentansprüche

1. Opazifierungszusammensetzung für Süßwaren und Nahrungsmittel, umfassend ein Lackpigment, das Lackpigment umfassend
a. 0,0001 Gew.-% bis etwa 5 Gew.-% eines oder mehrerer Färbemittel, bezogen auf das Gesamtgewicht der Opazifierungszusammensetzung; und
b. 99,9999 Gew.-% bis etwa 95 Gew.-% Aluminiumhydroxid, bezogen auf das Gesamtgewicht der Opazifierungszusammensetzung.

2. Zusammensetzung nach Anspruch 1, wobei der eine oder die mehreren Farbstoffe einen FD&C-Lack umfassen, ausgewählt aus der Gruppe bestehend aus FD&C Blue #2 Lake, FD&C Green #3 Lake, FD&C Yellow 5 Lake, FD&C Yellow #6 Lake, FD&C Red #40 Lake, FD&C Blue #1 Lake und Mischungen davon.

3. Zusammensetzung nach Anspruch 1, ferner umfassend einen natürlichen Farbstoff.

4. Opazifierungszusammensetzung nach Anspruch 1 oder Anspruch 3, wobei das Lackpigment ausgewählt ist aus der Gruppe umfassend Blue # 1 Lackpigment, Yellow # 5 Lackpigment und Kombinationen davon, und wobei der eine oder die mehreren Farbstoffe in einer Menge von etwa 0,0001 Gew.-% bis etwa 2 Gew.-% der Opazifierungszusammensetzung vorliegen.

5. Beschichtungszusammensetzung, umfassend eine oder mehrere Sirupschichten, wobei mindestens eine Schicht eine Opazifierungszusammensetzung nach Anspruch 1 oder Anspruch 3 umfasst, umfassend einen oder mehrere FD&C-Farbstoffe von etwa 0,0001 Gew.-% bis etwa 1,0 Gew.-%, bezogen auf das Gesamtgewicht der Opazifierungszusammensetzung, und wobei die Opazifierungszusammensetzung von etwa 0,05 Gew.-% bis etwa 20,0 Gew.-% der Beschichtungszusammensetzung vorhanden ist.

6. Beschichtung nach Anspruch 5, wobei die Opazifierungszusammensetzung
A) als Vorbeschichtungszuckersirupschicht vorliegt, oder
B) durch Trockenladung hinzugefügt wird, oder
C) in zwei oder mehreren der Zuckersirupschichten vorliegt.

7. Beschichtung nach Anspruch 5, wobei
A) eine oder mehrere der Zuckersirupschichten die Opazifierungszusammensetzung nicht enthalten, oder
B) wobei die Siruplösung einen nicht-künstlichen Zucker, ausgewählt aus der Gruppe bestehend aus Saccharose, Glucose und Dextrose, enthält, oder
C) wobei die Beschichtung kein Titandioxid enthält.

8. Hartdrageekonfekt, umfassend einen verzehrbaren Kern, der mit einer Hartdrageebeschichtung beschichtet ist, umfassend eine oder mehrere Zuckersirupschichten, wobei mindestens eine Schicht eine Opazifierungszusammensetzung nach Anspruch 1 mit einem oder mehreren Farbstoffen von etwa 0,0001 Gew.-% bis etwa 2,0 Gew.-%, bezogen auf das Gesamtgewicht der Opazifierungszusammensetzung, umfasst, und wobei die Opazifierungszusammensetzung von etwa 5,0 Gew.-% bis etwa 20,0 Gew.-% der Hartdrageebeschichtung vorliegt.

9. Hartdrageekonfekt nach Anspruch 8, wobei der verzehrbare Kern ein verzehrbares Material umfasst, ausgewählt aus der Gruppe bestehend aus einem nicht künstlichen Zentrum, einem Konfekt, einem Kaugummi, einem auf Getreide basierenden Gegenstand und Kombinationen davon, oder wobei der verzehrbare Kern Schokolade umfasst.

10. Hartdrageekonfekt nach Anspruch 8, wobei die mindestens eine Opazifierungszusammensetzung nächstmöglich zu dem verzehrbaren Kern angeordnet ist, oder sich in irgendeiner der Schichten eines Beschichtungsverfahrens befinden kann, welche die äußersten Farbschichten, die Wachsschicht oder die verzehrbare Tinte umfasst.

11. Verfahren zum Beschichten eines verzehrbaren Kerns mit einer Hartdrageebeschichtung, umfassend:
a) Aufbringen einer ersten Beschichtungszusammensetzung, umfassend die Opazifierungszusammensetzung nach Anspruch 1, dispergiert in einem Zuckersirup in einer Menge von etwa 1Gew.-% bis etwa 30 Gew.-% bezogen auf das Gesamtgewicht der ersten Beschichtungszusammensetzung, um mindestens eine Schicht der Hartdrageebeschichtung bereitzustellen; und
b) Aufbringen einer zweiten Beschichtungszusammensetzung, die Zuckersirup umfasst, aber keine Opazifierungszusammensetzung umfasst, um mindestens eine zusätzliche Schicht der Hartdrageebeschichtung bereitzustellen.

12. Verfahren nach Anspruch 11,
A) ferner umfassend mindestens teilweises Trocknen der Schichten nach jedem der Schritte a) und b); oder
B) wobei die erste Beschichtungszusammensetzung auf eine vorbereitete Oberfläche des verzehrbaren Kerns aufgebracht wird; oder
C) wobei die zweite Beschichtungszusammensetzung ferner ein natürliches Farbmittel umfasst; oder
D) wobei die erste Beschichtungszusammensetzung und die zweite Beschichtungszusammensetzung kein Titandioxid umfassen.

13. Verwendung der Opazifierungszusammensetzung nach Anspruch 1 zum Bereitstellen einer opaken weißen Erscheinungsform für Nahrungsmittel, Haustierfutter, Beschichtungen, verzehrbare Tinten, Süßwarenprodukte und Kombinationen davon.

## Revendications

1. Composition opacifiante pour confiseries et aliments comprenant un pigment laqué, dans laquelle le pigment laqué comprend
a. 0,0001 % en poids à environ 5 % en poids d'un ou plusieurs colorants, sur la base du poids total de la composition opacifiante ; et,
b. 99,9999 % en poids à environ 95 % en poids d'hydroxyde d'aluminium, sur la base du poids total de la composition opacifiante.

2. Composition selon la revendication 1, dans laquelle les un ou plusieurs colorants comprennent une laque FD&C choisie dans le groupe constitué par laque FD&C Blue n° 2, laque FD&C Green n° 3, laque FD&C Yellow 5, laque FD&C Yellow n° 6, laque FD&C Red n° 40, laque FD&C Blue n° 1, et des mélanges de celles-ci.

3. Composition selon la revendication 1, comprenant en outre un colorant naturel.

4. Composition opacifiante selon la revendication 1 ou la revendication 3, dans laquelle le pigment laqué est choisi dans le groupe comprenant le pigment laqué Bleu n° 1, le pigment laqué Yellow n° 5, et des combinaisons de ceux-ci, et dans laquelle les un ou plusieurs colorants sont présents en une quantité d'environ 0,0001 % en poids à environ 2 % en poids de la composition opacifiante.

5. Composition d'enrobage, comprenant une ou plusieurs couches de sirop, dans laquelle au moins une couche comprend une composition opacifiante selon la revendication 1 ou la revendication 3, comprenant un ou plusieurs colorants FD&C à raison d'environ 0,0001 % en poids à environ 1,0 % en poids, sur la base du poids total de la composition opacifiante, et dans laquelle la composition opacifiante est présente à raison d'environ 0,05 % en poids à environ 20,0 % en poids de la composition d'enrobage.

6. Enrobage selon la revendication 5, dans lequel la composition opacifiante
A) est présente sous la forme d'une couche de sirop de sucre de pré-enrobage, ou
B) est ajoutée par une charge sèche, ou
C) est présente dans deux des couches de sirop de sucre ou plus.

7. Enrobage selon la revendication 5, dans lequel
A) une ou plusieurs des couches de sirop de sucre ne contiennent pas la composition opacifiante, ou
B) dans lequel la solution de sirop contient un sucre non artificiel choisi dans le groupe constitué par le saccharose, le glucose et le dextrose, ou
C) dans lequel l'enrobage ne contient pas de dioxyde de titane.

8. Confiserie durcie, comprenant un noyau comestible enrobé d'un enrobage durci, comprenant une ou plusieurs couches de sirop de sucre, dans laquelle au moins une couche comprend une composition opacifiante selon la revendication 1 ayant un ou plusieurs colorants d'environ 0,0001 % en poids à environ 2,0 % en poids sur la base du poids total de la composition opacifiante, et dans laquelle la composition opacifiante est présente d'environ 5,0 % en poids à environ 20,0 % en poids de la composition d'enrobage durci.

9. Confiserie durcie selon la revendication 8, dans laquelle le noyau comestible comprend une matière comestible choisie dans le groupe constitué par un centre non artificiel, une confiserie, une gomme à mâcher, un article à base de grains, et des combinaisons de ceux-ci, ou dans laquelle le noyau comestible comprend du chocolat.

10. Confiserie durcie selon la revendication 8, dans laquelle au moins une composition opacifiante est disposée au plus près du noyau comestible qu'elle peut l'être, ou elle pourrait se trouver dans l'une quelconque des couches d'un processus d'enrobage incluant les couches colorantes les plus extérieures, la couche de cire ou l'encre comestible.

11. Procédé d'enrobage d'un noyau comestible avec un enrobage durci, comprenant :
a) l'application d'une première composition d'enrobage comprenant la composition opacifiante de la revendication 1 dispersée dans un sirop de sucre en une quantité d'environ 1 % en poids à environ 30 % en poids sur la base du poids total de la première composition d'enrobage pour fournir au moins une couche de l'enrobage durci ; et
b) l'application d'une deuxième composition d'enrobage comprenant du sirop de sucre mais ne comprenant pas de composition opacifiante pour fournir au moins une couche supplémentaire de l'enrobage durci.

12. Procédé selon la revendication 11,
A) comprenant en outre le séchage au moins partiel des couches après chacune des étapes a) et b) ; ou
B) dans lequel la première composition d'enrobage est appliquée sur une surface préparée du noyau comestible ; ou
C) dans lequel la deuxième composition d'enrobage comprend en outre un colorant naturel ; ou
D) dans lequel la première composition d'enrobage et la deuxième composition d'enrobage ne comprennent pas de dioxyde de titane.

13. Utilisation de la composition opacifiante selon la revendication 1 pour conférer un aspect blanc opaque à des aliments, des aliments pour animaux domestiques, des enrobages, des encres comestibles, des produits de confiserie et des combinaisons de ceux-ci.
